# EUROPEAN PATENT SPECIFICATION

(11) **EP 2 231 854 B1**
(45) Date of publication and mention of the grant of the patent: **20.06.2012**
(21) Application number: 09702539.9
(22) Date of filing: 15.01.2009
(51) Int. Cl.: C12N 1/14, A01G 1/04

(54) **METHOD AND SYSTEM FOR IN VITRO MASS PRODUCTION OF ARBUSCULAR MYCORRHIZAL FUNGI**
VERFAHREN UND SYSTEM ZUR IN-VITRO-MASSENHERSTELLUNG ARBUSKULÄRER MYKORRHIZAPILZE
PROCÉDÉ ET SYSTÈME POUR UNE PRODUCTION EN MASSE IN VITRO DE CHAMPIGNONS MYCORRHIZIENS ARBUSCULAIRES

(30) Priority: 15.01.2008 EP 08150288
(43) Date of publication of application: 29.09.2010
(73) Proprietor: Université Catholique de Louvain, 1348 Louvain-la-Neuve (BE)
(72) Inventor: DECLERCK, Stéphane, B-1360 Orbais (BE); IJDO, Marleen, 3143 AS Maassluis (NL); FERNANDEZ SUAREZ, Kalyanne, Ciudad De La Habana (CU); VOETS, Liesbeth, B-3120 Tremelo (BE); DE LA PROVIDENCIA, Ivan, 1348 Louvain-la-Neuve (BE)
(74) Representative: Bounaga, Sakina
(86) International application number: PCT/EP2009/050434
(87) International publication number: WO 2009/090220

(56) References cited:
- GB-A- 2 043 688
- GB-A- 2 119 617
- US-A- 5 554 530
- US-A1- 2003 203 474

## Description

### Field of the invention

The present invention relates to an improved method and system for the production of arbuscular mycorrhizal fungi. More in particular, the invention is directed to a method and system for *in vitro* mass production of arbuscular mycorrhizal fungi.

### Background of the invention

The arbuscular mycorrhizal (AM) symbiosis is considered to be amongst the most important terrestrial symbiosis '*that help feed the world*'. AM fungi supply the majority of land plants with nutrients, thus increasing growth and yield, and confer resistance against biotic and abiotic stresses. Hence the exploitation of these plant-beneficial symbionts in agro-environments is of high environmental relevance, economic value and societal impact.

A number of small and medium enterprises (SMEs) emerged this last decade, commercialising the production of AM fungi inoculum, which now becomes attractive for applications from large-scale agriculture to home gardening. The broad-scale exploitation of AM fungi is e.g. crucial for reducing pollution by pesticides and fertilizers, land restoration, and improving food quality.

However, it is not possible to mass-produce AM fungi axenically because of their obligate symbiotic lifestyle ― consequently, quality control is problematic. Most companies today produce AM fungi inoculum on plants grown under *in vivo* (e.g. in greenhouse) conditions. Therefore they cannot strictly guarantee the absence of undesirable contaminants.

The recent emergence of the *in vitro* root-organ culture (ROC) system, owed to the production of contaminants-free and high quality AM fungal material, open a new era for research and makes mass-production in bioreactors conceivable. ROC-produced inoculum was recently proved convenient for field-application by increasing plant biomass. Such method for mass production is known from document US-A-5 554 530. However, ROC production is costly and the scaling-up is complex. Therefore, a bioreactor system to mass-produce these organisms is requested. This was proposed by Jolicoeur et al. (1999 - Production of *Glomus intraradices* propagules, an arbuscular mycorrhizal fungus, in an airlift bioreactor) that developed a patent on this technology. This system, although interesting, is costly, complex to manage and build on a genetically modified organism as host to grow the AM fungi.

It is therefore an object of the present invention to provide an improved method and device or system for producing AM fungi which overcomes at least some of the problems of prior art methods and device.

### Summary of the invention

The present invention is directed to the development of an *in vitro* mass production system (or device) of arbuscular mycorrhizal fungi.

The term "arbuscular mycorrhizal fungi" (AM fungi) as used herein is intended to refer to fungi from the Glomeromycota Phylum, preferably from the Order Glomerales and more preferably to species such as, but not exclusively, *Glomus intraradices, Glomus proliferum, Glomus etunicatum, Glomus clarum, Glomus manihotis, Glomus aggregatum, Glomus caledonium, Glomus claroideum, Glomus fasciculatum and Glomus hoï.*

In a first aspect, the invention relates to a system for *in vitro* mass production of AM fungi, preferably when grown in symbiotic conditions with a plant (preferably a whole plant), and which is preferably cleaned-free from potential contaminant microbes, (i.e. preferably sterilisable), said system comprising
- a single whole plant, wherein the roots of said plant are enclosed in a growth tube for growing said plant in symbiosis with AM fungi,
- whereby said growth tube has at least one opening at both ends and is provided with a mesh device inside said tube, at one of its ends,
- a reservoir containing a suitable nutrient solution for feeding said plant and AM fungi,
- an inlet tube, provided at an upper part of said growth tube, and an outlet tube provided at a lower part of said growth tube for connecting said growth tube with said reservoir, whereby said inlet tube and said outlet tube comprise flexible tubes, which preferably are sterile, and wherein said growth tube is further provided with an opening for introducing the roots of a plant in said tube and allowing a shoot of said plant to grow outside the growth tube, and
- a pump, for circulating nutrient solution between the reservoir and the growth tube.

In a preferred embodiment, the invention provides a system wherein said single whole plant is pre-mycorrhized.

In another preferred embodiment, the present invention provides a system, wherein the pre-mycorrhized roots of said single whole plant are free of any microbial contaminant.

In a preferred embodiment, the invention provides a system, wherein said growth tube is provided in an inclined position.

In yet another preferred embodiment, the invention relates to a system, wherein the reservoir further comprises a sampling device, for instance a sampling tube, and/or an aeration filter.

In a second aspect, the present invention provides a method for preparing at least one pre-mycorrhized whole plant comprising the steps of:
a1) providing bi-compartmental Petri plates having a base and a lid and wherein a root compartment (RC) is provided physically separated from a hyphal compartment (HC),
a2) making a hole in the base and the lid of the Petri plates at the RC side,
a3) filling the RC and HC with a suitable medium,
a4) transferring at least one sterilized plant to the RC with the roots placed on the surface of the medium and the shoot extending outside the Petri plate,
a5) inoculating contaminant-free spores of an AM fungus in the vicinity of the plant roots and sealing the plates preferably to avoid contaminations,
a6) wrapping the Petri plates to keep the AM fungus and plant roots in the dark,
a7) transferring the Petri plates to a growth chamber preferably under controlled conditions of temperature, relative humidity, photoperiod and light intensity,
a8) once the AM fungi have colonized the RC and HC of the plate, making one or more additional holes in the base and the lid of the HC and introducing one or more additional sterilized plants in said additional holes, and
a9) growing said additional plants in the mycelium network, thereby obtaining pre-mycorrhized plants.

In a preferred embodiment, said one or more additional plants in step (a8) are in the 3 to 4 leave stage and have a radical system with 2 or 3 roots.

In another preferred embodiment, said the pre-mycorrhized plants have roots free of any microbial contaminant (also referred as "microbial contaminant-free roots" or "aseptic roots").

In a third aspect, the invention relates to a method for *in vitro* mass production of AM fungi, preferably when grown in symbiotic conditions with a (whole) plant, comprising:
a) preparing a pre-mycorrhized plant,
b) introducing said pre-mycorrhized plant in a sterilised system according to the invention, whereby roots of said plant are introduced in said growth tube and shoot(s) of said plant is (are) allowed to grow outside the growth tube, and
c) growing the roots of said introduced plant at a temperature of 18-25°C, a relative humidity of 60-80%, a light intensity (photosynthetic photon flux - PPF) of 200-400 µmol m-2 s-1 and day length of 16h day / 8h night, and growing the shoot(s) of said plant in open air conditions.

In particular, the present invention provides a method for *in vitro* mass production of AM fungi comprising the steps of:
a) preparing at least one pre-mycorrhized whole plant,
b) introducing the roots of a single pre-mycorrhized whole plant in a sterilised system, wherein said system comprises a growth tube provided with one opening at both ends and further provided with a further opening on its upper side for introducing said roots in said tube and allowing shoot(s) of said plant to grow outside the growth tube, said growth tube further comprising a mesh device separating the root from the end of the tube, said system further comprising a reservoir containing a nutrient solution for feeding said plant and AM fungi, said reservoir being operably connected to the growth tube, and
c) growing the roots of said introduced plant at a temperature of 18-25°C, a relative humidity of 60-80%, a light intensity (photosynthetic photon flux - PPF) of 200-400 µmol m-2 s-1 and day length of 16h day / 8h night, and growing the shoot(s) of said plant in open air conditions.

In an embodiment, the AM fungi is isolated and collected from the growth system. For example, said AM fungi can be collected after a period of 2 to 3 months. Said AM fungi can be collected by physically separating the shoot of the plant from the mycorrhized root system. The root system can be further sheared to small fragments using for example a homogenizer, each fragment representing a propagule. In an embodiment, AM fungi spore are collected on the mesh of the tube and retrieved from said tube. The AM fungi, i.e. isolated spores and mycorrhizal root fragments can be combined (mixed) or maintained separated and handled for further inoculation. Inoculum can be packaged either by dilution in sterilized substratum (e.g. perlite, calcined clay), by entrapments in beads (e.g. alginate) or sold as such in sterilized water.

In a preferred embodiment, said pre-mycorrhized whole plant is prepared according to the method of the invention for preparing pre-mycorrhized plants.

In a preferred embodiment, said step a) comprises the steps of:
a1) providing bi-compartmental Petri plates having a base and a lid and wherein a root compartment (RC) is provided separated from a hyphal compartment (HC),
a2) making a hole in the base and the lid of the Petri plates at the RC side,
a3) filling the RC and HC with a suitable medium,
a4) transferring plants to the RC with the roots placed on the surface of the medium and the shoot extending outside the Petri plate,
a5) inoculating spores (preferably contaminant-free spores) of an AM fungus in the vicinity of plant roots and sealing the plates to avoid contaminations,
a6) wrapping the Petri plates to keep the AM fungus and plant roots in the dark,
a7) transferring the Petri plates to a growth chamber under controlled conditions of temperature, relative humidity, photoperiod and light intensity,
a8) once the AM fungi have colonized the RC and HC of the plate, making on or more additional holes in the base and the lid of the HC and introducing additional plants in said additional holes, preferably plant in the 3 to 4 leave stage and having a radical system with 2 or 3 roots, and
a9) growing said additional plants for a suitable period of time thereby obtaining pre-mycorrhized plants.

Preferably, said AM fungi applied in the present method and system are fungi selected from the Glomeromycota Phylum, preferably from the Glomerales Order and more preferably, but not exclusively, from the species *Glomus intraradices, Glomus proliferum, Glomus etunicatum, Glomus clarum, Glomus manihotis, Glomus aggregatum, Glomus caledonium, Glomus claroideum, Glomus fasciculatum and Glomus hoï.*

In another preferred embodiment, the plants applied in the present method and system are selected from the group comprising grasses, N-fixing dicots, non-N-fixing dicots, legumes, crops, and preferably a *Medicago* sp., and most preferably *Medicago truncatula.*

In another preferred embodiment, said production method is performed in semi-hydroponic conditions.

Herein a new bioreactor concept is proposed which is different from the bioreactor developed in the prior art as mentioned above and even different from any bioreactor defined as a vessel for modest-to-large-scale liquid suspension culture of cells, in which conditions are optimised for high production levels. The novelty is of three orders.
1. the AM fungal inoculum is produced under *in vitro* semi-hydroponic conditions not in submerged conditions.
2. the AM fungal inoculum is produced on an autotrophic plant with roots developing *in vitro* and not on an excised root organ or as isolated cells.
3. the AM fungal inoculum is produced under strict *in vitro* contaminant-free conditions, while the plant shoot develops in open air, therefore in two different environments.

With the insight to better show the characteristics of the invention, some preferred embodiments and examples of embodiments are described hereafter referring to the enclosed figures.

### Description of the figures

**Figure 1** illustrates an embodiment of a system according to the invention for the production of AM fungi. **Figure 1** illustrates a system comprising a PVC tube 1 with an inlet 2 a mycorrhized plant with shoot 6 and mycorrhized roots 7, a mesh 5 and an outlet 3; said system further comprising a bottle 8 of nutrient solution 9, inlet 14 and outlet 12 tubes, a sampling tube 11 and aeration filter 15; and a peristaltic pump 10. The arrows 16 indicate circulation of nutrients.
**Figure 2** describes a system according to the invention using multiple tubes 1.
**Figure 3** describes a system according to the invention for the production of the *in vitro* pre-mycorrhized plants. **Figures 3A, 3B, 3C and 3D** show a schematic representation of the autotrophic *in vitro* culture system developed for the production of pre-mycorrhizal plantlets.
**Figure 4** represents a bar graph showing the percentage of root colonization per days of contact with the extraradical mycelium network in a pre-mycorrhization method according to an embodiment of the invention.

### Detailed description

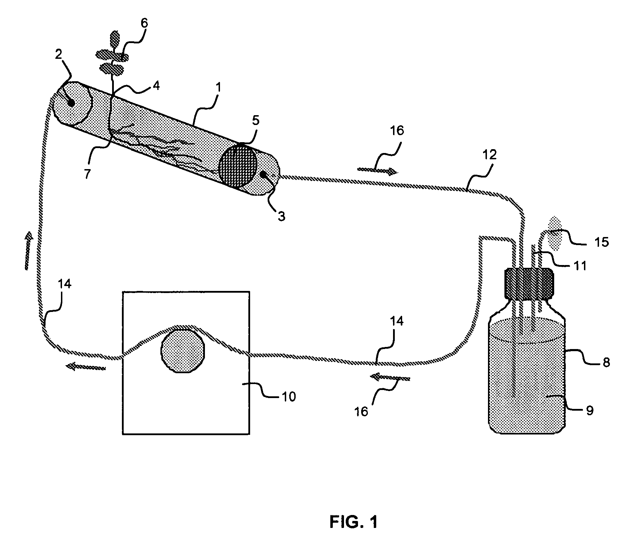

Referring to Figure 1, a system according to an embodiment of the invention is illustrated comprising an inclined plastic tube 1 with an opening 4 at the top in which a pre-mycorrhized *in vitro* produced plant is introduced so that the shoot 6 extends outside while the root 7 develops inside. The inside part of the tube is sterile and is the 'tank' in which the AM fungi will be mass-produced. At each extremity of the plastic tube 1 a hole 2, 3 is made. At the lower side of the plastic tube 1, the hole 3 is connected to a preferably sterile flexible tube 12 (outlet tube). This tube 12 is also connected to the upper part of a reservoir 8 containing a suitable nutrient solution 9, as disclosed herein. A second sterile flexible tube 14 is connected to the reservoir 8 and plunges in said nutrient solution 9. This flexible tube 14 (inlet tube) is also connected to the upper part 2 of the plastic tube1. In-between the reservoir 8 and the plastic tube 1, the flexible tube 14 passes through a peristaltic pump 10 that transport the nutrient solution 9 to the upper part 2 of the plastic tube 1. Since the plastic tube 1 is inclined, the nutrient solution 9 flows by gravity on the mycorrhizal root system 7 and leaves the plastic tube through the opening 3 at the outlet. The exceeding nutrient solution 9 in turned back to the reservoir 8 through the flexible outlet tube 12. At any time, concentration of nutrients can be monitored through a sampling tube 11. Within the plastic tube 1 a fine mesh 5 is placed to avoid roots 7 to enter the outlet flexible tube 12.

The system has the advantage of having one plant per tube. This allows the modulating of the nutrient content per plant; it also allows the diminution of the risk of contaminations and further allows to run different plant/AM fungi couples at the same time in a restricted space.

After a suitable period of time, the AM fungi can be collected. For example, after a period of 2-3 months, the inlet and outlet flexible tubings connected to the tube are closed with clamps and said tube is disconnected from the system. The tube is opened at its upper part (2 on the figure 1) under sterile conditions. The remaining liquid in said tube is added to a first beaker. The shoot is subsequently cut and the mycorrhizal roots extracted with a handling device such as a forceps. The root system can be further sheared to small fragments with a homogenizer, each fragment representing a propagule. Said roots are maintained in a second beaker. The tube is then opened at its lower part and remaining inoculum (i.e. spores) on the mesh are extracted and added to the first beaker. Inocula in both beakers are subsequent handled for inoculum preparation. The AM fungi, i.e. isolated spores and mycorrhizal root fragments can be combined (mixed) or maintained separated. Inoculum can be packaged either by dilution in sterilized substratum (e.g. perlite, calcined clay), by entrapments in beads (e.g. alginate) or sold as such in sterilized water.

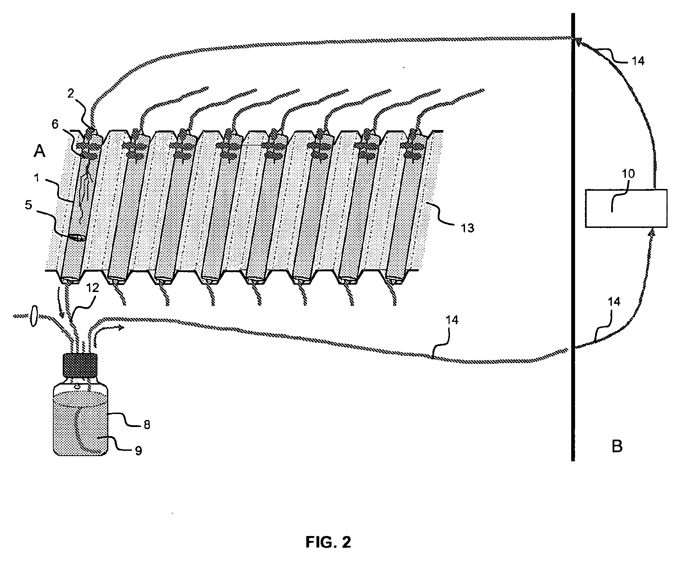

Figure 2 describes a system according to the invention using multiple tubes 1. A single peristaltic pump 10 connects several tubes 1 with several reservoirs 9 (only one reservoir is shown in Figure 2). Each tube comprises a single plant 6. The tubes 1 are provided on a tube holder 13. With this multiple system a high number of different AM fungi with different functions can be produced concomitantly, at a very reasonable cost. Different plants can also be used to support the growth of the different AM fungi.

The system in Figure 2, part A can be provided in a Phytotron, on an adjustable table 13, the peristaltic pump 10 can be outside the Phytotron.

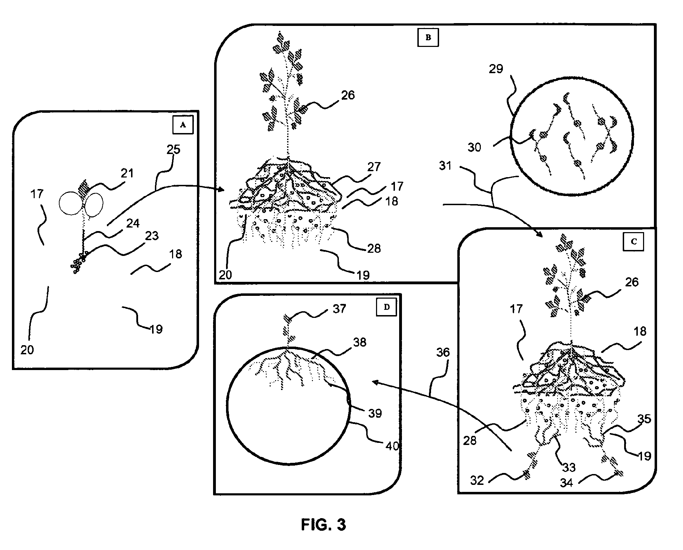

Figure 3 describes a system according to the invention for the production of the *in vitro* pre-mycorrhized plants. Figure 3 is a schematic representation of the autotrophic *in vitro* culture system developed for the production of pre-mycorrhizal plantlets. The *in vitro* Pre-mycorrhization method is performed in bi-compartmented systems using a donor mycorrhizal plant and two receiver plants, and has the advantage of using sugar and vitamin-free medium since whole plants are used.

In Figure 3A, a Petri dish 17 is used. Said Petri dish 17 is provided with a partition wall 20, delimiting a root compartment 18, and hyphal compartment 19. In Figure 3A: A plantlet 21 such as a *Medicago truncatula* plantlet (four to seven days old), the root of which is associated with a fungi 23 such as *G*. *intraradices is provided and grown* in an autotrophic *in vitro* culture system on the modified Strullu & Romand (MSR) medium, lacking sucrose and vitamins. In an embodiment, the roots of said plant is bacterial contaminant free, preferably, the whole plant is contaminant free. In another embodiment said fungi is contaminant free. The system is such that the shoot of the plantlet 21 grows outside the dish 17. Figure 3B shows the plant 26 after two months of association. The root system 27 of said plant 26 has developed in said dish 17 in the root compartment 18. A profuse extraradical mycelium 28 bearing spores is developing in the hyphal compartment 19 separated from the root compartment 18 by partition wall 20. Figure 3C schematically illustrate the *in vitro* pre-mycorrhization in the bi-compartmented dish 17 using the donor mycorrhizal plant 26 and two receiver plants 32 and 34. Disinfected seeds 30 are plated on mono-compartmented Petri plates 29 on a suitable growth medium and incubated for a short period to obtain plants having 3-4 leaves and 2-3 roots. The roots 33 and 35 of two micropropagated plantlets 32 and 34 (ten-days old) obtained from the seeds 30 grown in Petri dish 29, were inserted in the hyphal compartment 19 comprising the mycelium 28 to obtain pre-mycorrhized plantlets. The obtained mycorrhized plantlets obtained can be either directly inserted in a device as illustrated in Figure 1 or can be optionally further grown as illustrated in Figure 3D which schematically illustrates the transfer of the pre-mycorrhized plantlet 37 on a fresh medium in Petri dish 40. The mycelium 38 in the root system 39 is re-grown in fresh MSR medium.

The present invention permits the mass production of single-species AM fungi, without risks of contamination. The method and system of the invention does not necessitate transformed organs as host or inoculum carrier. The AM fungi can be produced at low-cost, and the system can be miniaturized thereby using minimal space.

The method of production can use a multi-channelled production system as shown in Figure 2, with allows the coupling of different plant/AM fungi instead of one single batch.

The AM fungi can be massively produced in a short period of for example 2 to 3 months.

In an embodiment, the present mass production method comprises two phases of production: a pre-mycorrhization phase in bi-compartmental Petri plates with donor and receiver plants, and the mass production in recycled nutrient flow with production of microbial contaminant-free mycorrhizal roots and spores.

### Example

### a. Nutrient solution

A nutrient solution which can be used for the pre-mycorrhization of the plants as well as in the semi-hydroponic bio-reactor is any medium suitable for the plant and AM fungi growths. In particular, the nutrient solution used is the modified Strullu-Romand (MSR) medium (Declerck *et al.,* 1998). An example of a preferred medium is provided in **Table 1.**

**Table 1**

| **Composition** | **MSR medium** |
|---|---|
| N (NO₃⁻), µM | 3 800 |
| N (NH₄⁺), µM | 180 |
| P (µM) | 30 |
| K (µM) | 1 650 |
| Ca (µM) | 1 520 |
| Mg (µM) | 3 000 |
| S (µM) | 3 013 |
| Cl (µM) | 870 |
| Na (µM) | 20 |
| Fe (µM) | 20 |
| Mn (µM) | 11 |
| Zn (µM) | 1 |
| B (µM) | 30 |

### b. Plants that can be used in the system

The system is applicable to a wide number of plants among which grasses (e.g. *Poa pratensis L.* and *Lolium perenne L*.), N-fixing dicots (e.g. *Medicago truncatula L.* and *Lotus Japonicus L*.), non-N-fixing dicots (e.g. *Plantago lanceolata L*.), legumes (e.g. *Allium porum L*), crops (e.g. wheat, rice, potato). In particular, the system is described with *Medicago truncatula.*

In an example, seeds of *Medicago truncatula* were surface-sterilized by immersion in sodium hypochlorite (8%) for 10 min, rinsed in deionised sterile water and placed on Petri plates (90 mm diameter, 25 seeds per plate) filled with 35 ml MSR medium lacking sucrose and vitamins, and solidified with 3 g l⁻¹ GelGro™. Plates were incubated at 27°C in the dark.

### c. Production of in vitro pre-mycorrhized plants (see Figure 3).

AM fungi from the Glomeromycota Phylum can be used, preferably from the Glomerales Order and more preferably, but not exclusively, from the species *Glomus intraradices, Glomus proliferum, Glomus etunicatum, Glomus clarum, Glomus manihotis, Glomus aggregatum, Glomus caledonium, Glomus claroideum, Glomus fasciculatum and Glomus hoï.*

The system is based on the autotrophic *in vitro* culture system developed by Voets *et al.* (2005). Bi compartmental Petri plates 17 (90 mm diameter) are used in order to physically separate a root compartment 18 from a hyphal compartment 19. A hole (± 2 mm diameter) is made in the base and the lid of the Petri plate at the root compartment 18 side. Both compartments 18 and 19 are filled with 20 ml of MSR medium lacking sucrose and vitamins, solidified with 4 g l⁻¹ Gel Gro™. Seven days-old sterile *M. truncatula* plantlets were transferred to the root compartment 18 (Fig. 3-A), with the roots 24 placed on the surface of the medium and the shoot extending outside the plate 17.

Spores of *G*. *intraradices* (an AM fungus) are extracted from a 4-months old ROC (from the Mycothèque de l'Université Catholique de Louvain) by solubilization of the MSR medium following the procedure of Doner & Bécard (1991). Approximately fifty spores 23 are inoculated in the vicinity of *M*. *truncatula* roots 24. Plates 17 are then sealed with Parafilm (Pechiney, Plastic Packaging, Chicago, IL 60631) and the hole carefully plastered with sterilized (121°C for 15 min.) silicon grease (VWR International, Belgium) to avoid contaminations. Subsequently, Petri plates 17 are wrapped with an opaque plastic bag to keep the AM fungi and *M. truncatula* roots in the dark, whereas the shoots develop in open air conditions. The systems are transferred to a growth chamber under controlled conditions of temperature, relative humidity, photoperiod and light intensity.

When the fungal colony 28 extensively colonized the root compartment 18 and hyphal compartment 19 (-2 months after inoculation), two new holes (± 2 mm diameter) apart from each other of about 4.5 cm are made in the base and the lid of the HC following the same procedure as described above. A 7 to 10-days old sterile *M. truncatula* plantlet 30 produced in monocompartmented Petri plates 29 is introduced in the hyphal compartment 19. The plantlets 32, 34 of 3 cm long (between 3 and 4 leaves) and a radical system 33, 35 with 2 or 3 small roots approximately, is introduced in each hole. This allows the young roots 33, 35 to be in contact with the highly dense mycelium network 28 previously developed in the hyphal compartment 19 bearing thousands of spores and branched absorbing structures.

### d. Optimal age to transfer the pre-mycorrhized plants to the semi-hydroponic bio-reactor.

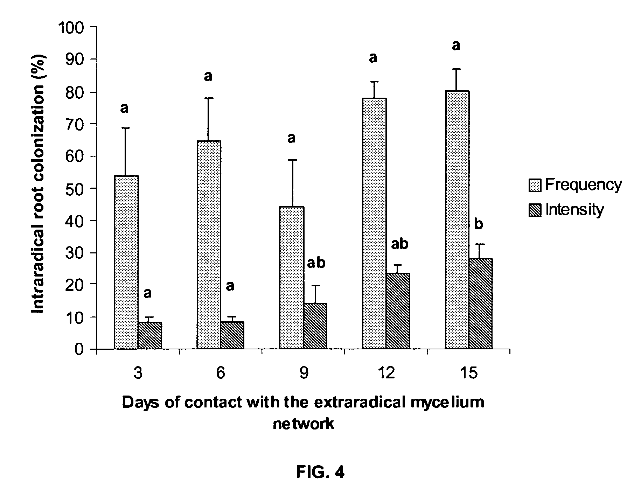

Results in the present example are shown in Figure 4 and showed that the optimal age of the pre-mycorrhized plants is about 9-12 days. This system allowed the production of mycorrhizal plants in an optimal period of 12 days with root colonization of about 80% as shown in Figure 4. After this period the fungus is strongly present in the root system of the plants and re-grows easily out of it to sporulate massively.

### e. How to get the plants in the bio-reactor

The whole system of e.g. Figure 1 is sterilized, e.g. with gamma-radiation for the tube and with classical sterilisation using autoclave, before introduction of a mycorrhizal plant. The system is then transferred under the laminar hood and the pre-mycorrhized plant is introduced through the hole in the tube so that the roots are in the tube and the shoot outside. The hole of the tube is then plastered to avoid the development of contaminants inside. The complete system in then transferred in the growth chamber and nutrients are delivered thorough the peristaltic pump.

### f. Angle of the tubes.

It is important that the tubes have a good angle. If the angle is too big, then nutrients flow too fast. If the angle is too short, then the nutrients remain in the tube. The root system should simply bath in the flowing solution to avoid them to dry out or to undergo anoxic conditions. The system favours gas exchanges and nutrition.

### g. Conditions in the growth chamber (growth tube)

Environmental conditions are essential for an optimal plant and AM fungus development. The following conditions can be used: temperature of 18-25°C, relative humidity of 60-80%, light intensity (photosynthetic photon flux - PPF) of 200-400 µmol m-2 s-1 and day length of 16h day / 8h night.

The present method and system has following technical advantages compared to prior art systems;
1. The cost of the system is low. The system consists of a plastic tube, two flexible tubes, a reservoir and a plastic pump + a couple of other materials. The cost is mostly supported by the peristaltic pump. The peristaltic pump can be easily connected with several tubes, therefore decreasing dramatically the cost. We estimate that one peristaltic pump can sustain five tubes therefore the cost should be much lower per system compared with the price of a classical bioreactor.
2. The space. The system is grown in a growth chamber, also called a Phytotron, that can contain several systems under the same growth conditions.
3. The system can be used to produce several different AM fungal species according to the low cost and possibility to connect several tubes.

### Market and industrial application

Inoculation of plants with beneficial organisms such as bacteria and fungi has become an established agricultural practice over the last decades. Inoculants may either
- Improve host plant nutritional status and reduce the need for fertilizers input.
- Control pests or diseases and reduce the need for pesticides.
- Or generally improve crop yields by a combination of effects.

Although their evident potential, the world market of bio-pesticides, i.e. a pesticide that is of biological in origin, and bio-fertilizers, i.e. a substance that contains living microorganisms which promotes growth by increasing the availability of nutrients to the plants, remains small, e.g. 0.5% for bio-pesticides and 7.5% for bio-fertilizers, and is characterized by a large number of products, e.g. more than 780 different products for bio-pesticides in 2001, and SME's. Bio-fertilizers are more common and represent 7.5% of the world market.

The use of microbial inoculants in agriculture and environment is predicted to increase in the coming years. In Europe, this is supported by the orientation of the COMMON AGRICULTURAL POLICY of the European Community which requires protection of the environment and natural resources (air, water, soil). But it is also supported by an increasing demand from the public for safe agricultural products with a decreasing use of chemicals (pesticides, fertilizers).

AM fungi are crucial 'resource' in this context acting as bio-pesticide and bio-fertilizer. These plant beneficial micro-organisms have played an essential role in sustainable agricultural systems for thousands of years, and have the potential to play an even greater role in the future, because of their significant contribution to plant nutrition (e.g. Nitrogen, Phosphorus), water uptake efficiency that help maximise the 'crop per drop", their eco-efficiency and competitiveness in line with the European strategy on life science and biotechnology and the Lisbon objectives.

Up to date an increasing number of companies are developing in EU and outside providing microbial inoculants for several markets from agriculture to home gardening. Regarding AM fungi, production is essentially based on *in vivo* inoculum with major risks associated to the presence of unwanted contaminants.

*In vitro* mass-production systems by-pass this problem but is nowadays expensive. Once mass-production is effectively developed and costs dramatically decreased, this *in vitro* material is of interest to the same sectors as above, i.e. agriculture, floriculture, horticulture, forestry, re-vegetation of polluted sites ... but also to sectors of activity which are less or not accessible to the classical inoculum production. These sectors include:
1. bio-plant sector. An increasing number of plants are produced *in vitro.* For instance in Belgium 50 million *in vitro* plants of various species are produced yearly. Worldwide, 75 millions *in vitro* banana plants and 700 000 palm tree are produced yearly. Pineapple (ananas), sugar cane, cereals ... are also concerned. These plants belongs to multiples sectors in
   a. agriculture (e.g. banana, coffee, ...)
   b. floriculture (e.g. Rhododendron, Azalea)
   c. horticulture
   d. forestry...

   *In vitro* produced plants would benefit from *in vitro* produced AM fungi better than *in vivo* produced material.
2. The biotechnology sector. Utilization of microbial bio-inoculants (e.g. AM fungi) for screening programs of various molecules, e.g. pesticides, ...
3. The research and science sector. Genomics for instance that request high amounts of *in vitro* produced material.

### References

Declerck S., Strullu D.G. and Plenchette C. (1998). Monoxenic culture of the intraradical forms of Glomus sp. isolated from a tropical ecosystem: a proposed methodology for germplasm collection. Mycologia 90: 579-585.
Doner L.W., Bécard G. (1991). Solubilization of gellan gels by chelation of cations. Biotechnology Techniques 5 (1): 25-28.
Jolicoeur M., Williams R.D., Chavarie C., Fortin J.A., Archambault J. (1999). Production of Glomus intraradices propagules, an arbuscular mycorrhizal fungus, in an airlift bioreactor. Biotechnology and bioengineering 63 (2): 224-232.
Voets L., Dupré de Boulois H., Renard L., Declerck S. (2005). Development of an autotrophic culture system for the in vitro mycorrhization of potato plantlets. FEMS Microbiology Letters 248:111-118.

## Claims

1. Method for preparing at least one pre-mycorrhized whole plant comprising the steps of:
a1) providing bi-compartmental Petri plates having a base and a lid and wherein a root compartment (RC) is provided physically separated from a hyphal compartment (HC),
a2) making a hole in the base and the lid of the Petri plates at the RC side,
a3) filling the RC and HC with a suitable medium,
a4) transferring at least one sterilized plant to the RC compartment with the roots placed on the surface of the medium and the shoot extending outside the Petri plate,
a5) inoculating spores of an arbuscular mycorrhizal (AM) fungus in the vicinity of the plant roots and sealing the plates,
a6) wrapping the Petri plates to keep the AM fungus and plant roots in the dark,
a7) transferring the Petri plates to a growth chamber;
a8) once the AM fungi have colonized the RC and HC of the plate, making on or more additional holes in the base and the lid of the HC and introducing one or more additional sterilized plants in said additional holes, and
a9) growing said additional plants in the mycelium network, thereby obtaining pre-mycorrhized plants.

2. The method according to claim 1, wherein said one or more additional plants in step (a8) are in the 3 to 4 leave stage and have a radical system with 2 or 3 roots.

3. The method according to claim 1 or 2, wherein said the pre-mycorrhized plants have microbial contaminant-free roots.

4. Method for *in vitro* mass production of AM fungi comprising the steps of :
a) preparing at least one pre-mycorrhized whole plant according to the method of any of claims 1 to 3,
b) introducing the roots of a single pre-mycorrhized whole plant prepared according to the method of any of claims 1 to 3, in a sterilised system, wherein said system comprises a growth tube provided with one opening at both ends and further provided with a further opening on its upper side for introducing said roots in said tube and allowing shoot(s) of said plant to grow outside the growth tube, said growth tube further comprising a mesh device separating the root from the end of the tube, said system further comprising a reservoir containing a nutrient solution for feeding said plant and AM fungi, said reservoir being operably connected to the growth tube, and
c) growing the roots of said introduced plant at a temperature of 18-25°C, a relative humidity of 60-80%, a light intensity of 200-400 µmol m-2 s-1 and day length of 16h day / 8h night, and growing the shoot(s) of said plant in open air conditions.

5. The method according to any of claims 1 to 4, wherein said AM fungi are fungi selected from the Glomeromycota Phylum , preferably from the Glomerales Order and more preferably, from the species *Glomus intraradices, Glomus proliferum, Glomus etunicatum, Glomus clarum, Glomus manihotis, Glomus aggregatum, Glomus caledonium, Glomus claroideum, Glomus fasciculatum and Glomus hoï.*

6. The method according to any of claims 1 to 5, wherein said plants are selected from the group comprising grasses, N-fixing dicots, non-N-fixing dicots, legumes, crops, and preferably a *Medicago* sp., and most preferably *Medicago truncatula.*

7. The method according to any of claims 3 to 6, wherein said production method is performed in semi-hydroponic conditions.

8. System for *in vitro* mass production of AM fungi comprising:
- a single whole plant prepared according to the method of claim 1, wherein the roots of said plant are enclosed in a growth tube for growing said plant in symbiosis with AM fungi,
- whereby said growth tube has at least one opening at both ends and is provided with a mesh device inside said tube, at one of its ends,
- a reservoir containing a suitable nutrient solution for feeding said plant and AM fungi,
- an inlet tube, provided at an upper part of said growth tube, and an outlet tube provided at a lower part of said growth tube for connecting said growth tube with said reservoir, whereby said inlet tube and said outlet tube comprise flexible tubes, which preferably are sterile, and wherein said growth tube is further provided with an opening for introducing the roots of a plant in said tube and allowing a shoot of said plant to grow outside the growth tube, and
- a pump, for circulating nutrient solution between the reservoir and the growth tube.

9. System according to claim 8, wherein said growth tube is provided in an inclined position.

10. System according to any of claims 8 or 9, wherein the reservoir further comprising a sampling device, for instance a sampling tube, and/or an aeration filter.

11. System according to any of claims 8 to 10, wherein said single whole plant is pre-mycorrhized.

## Patentansprüche

1. Verfahren zur Herstellung von mindestens einer pre-mycorrhizierten Gesamtpflanze, umfassend die folgenden Schritte:
a1) Bereitstellen von Petrischalen mit zwei Abteilungen mit einem Boden und einem Deckel, und wobei eine Wurzelabteilung (RC) physisch getrennt von einer hyphalen Abteilung (HC) bereitgestellt ist,
a2) Durchführen eines Lochs im Boden und im Deckel der Petrischalen auf der RC-Seite,
a3) Füllen von RC und HC mit einem geeigneten Medium,
a4) Übertragen von mindestens einer sterilisierten Pflanze auf die RC-Abteilung, wobei die Wurzeln auf der Oberfläche des Mediums angebracht werden und sich der Trieb außerhalb der Petrischale erstreckt.
a5) Impfen der Sporen eines arbuskulären Mykorrhiza (AM)-Pilzes in der Nähe der Pflanzenwurzeln und Versiegeln der Schalen,
a6) Umwickeln der Petrischalen, um den AM-Pilz und die Pflanzenwurzeln im Dunkeln zu halten,
a7) Übertragen der Petrischalen in eine Wachstumskammer;
a8) nachdem die AM-Pilze die RC und HC der Schale kolonisiert haben, Durchführen von einem oder mehreren zusätzlichen Löchern im Boden und im Deckel der HC und Einführen von einer oder mehreren sterilisierten Pflanzen in die zusätzlichen Löcher; und
a9) Züchten der zusätzlichen Pflanzen im Myceliumnetz, wodurch pre-mycorrhizierte Pflanzen erhalten werden.

2. Verfahren nach Anspruch 1, wobei sich die eine oder die mehreren zusätzlichen Pflanzen in Schritt (a8) im Stadium mit 3 - 4 Blättern befinden und ein Wurzelsystem mit 2 oder 3 Wurzeln aufweisen.

3. Verfahren nach Anspruch 1 oder 2, wobei die pre-mycorrhizierten Pflanzen Wurzeln keine mikrobiellen Verunreinigungen aufweisen.

4. Verfahren zur in vitro-Massenproduktion von AM-Pilzen, umfassend die folgenden Schritte:
a) Herstellen von mindestens einer pre-mycorrhizierten Gesamtpflanze gemäß dem Verfahren nach einem der Ansprüche 1 bis 3,
b) Einführen der Wurzeln einer einzelnen pre-mycorrhizierten Gesamtpflanze, hergestellt gemäß dem Verfahren nach einem der Ansprüche 1 bis 3, in ein sterilisiertes System, wobei das System ein Wachstumsrohr umfasst, ausgestattet mit einer Öffnung an beiden Enden und weiter ausgestattet mit einer weiteren Öffnung an seiner oberen Seite zur Einführung der Wurzeln in das Rohr und Ermöglichen, dass ein Trieb/Triebe der Pflanze außerhalb des Wachstumsrohrs wächst/wachsen, wobei das Wachstumsrohr weiter eine Gittervorrichtung umfasst, die die Wurzel vom Ende des Rohrs trennt, wobei das System weiter einen Behälter umfasst, der eine Nährlösung zur Nahrungsversorgung der Pflanze und der AM-Pilze enthält, wobei der Behälter im Betrieb mit dem Wachstumsrohr verbunden ist, und
c) Züchten der Wurzeln der eingeführten Pflanze bei einer Temperatur von 18 - 25 °C, einer relativen Feuchtigkeit von 60 - 80%, einer Lichtintensität von of 200 - 400 µmol m⁻² s⁻¹ und einer Tageslänge von 16h Tag / 8h Nacht, und Züchten des Triebs/der Triebe der Pflanze unter Freiluftbedingungen.

5. Verfahren nach einem der Ansprüche 1 bis 4, wobei die AM-Pilze Pilze sind, ausgewählt aus der Ordnung Glomeromycota Phylum, vorzugsweise aus der Ordnung Glomerales und insbesondere aus der Spezies *Glomus intraradices, Glomus proliferum, Glomus etunicatum, Glomus clarum, Glomus manihotis, Glomus aggregatum, Glomus caledonium, Glomus claroideum, Glomus fasciculatum* and *Glomus hoï*

6. Verfahren nach einem der Ansprüche 1 bis 5, wobei die Pflanzen ausgewählt sind aus der Gruppe umfassend Gräsern, N-fixierenden Dikotylen, nicht N-fixierenden Dikotylen, Leguminosen, Feldfrüchten und vorzugsweise *Medicago* sp. und insbesondere *Medicago truncatula.*

7. Verfahren nach einem der Ansprüche 3 bis 6, wobei das Herstellungsverfahren unter semihydroponischen Bedingungen durchgeführt wird.

8. System zur in vitro-Massenproduktion von AM-Pilzen, umfassend:
- eine einzelne Gesamtpflanze, hergestellt gemäß dem Verfahren nach Anspruch 1, wobei die Wurzeln der Pflanze in einem Wachstumsrohr eingeschlossen sind, um die Pflanze in Symbiose mit AM-Pilzen zu züchten.
- wobei das Wachstumsrohr mindestens eine Öffnung an beiden Enden aufweist und mit einer Gittervorrichtung in dem Rohr an einem seiner Enden ausgestattet ist,
- einen Behälter, der eine geeignete Nährlösung zur Nahrungsversorgung der Pflanze und der AM-Pilze enthält,
- ein Einlassrohr, bereitgestellt an einem oberen Teil des Wachstumsrohrs, und ein Auslassrohr, bereitgestellt an einem unteren Teil des Wachstumsrohrs, um das Wachstumsrohr mit dem Behälter zu verbinden, wobei das Einlassrohr und das Auslassrohr flexible Rohre umfassen, die vorzugsweise steril sind, und wobei das Wachstumsrohr weiter mit einer Öffnung ausgestattet ist, um die Wurzeln einer Pflanze in das Rohr einzuführen und zu ermöglichen, dass ein Trieb der Pflanze außerhalb des Wachstumsrohrs wächst; und
- eine Pumpe, um die Nährlösung zwischen dem Behälter und dem Wachstumsrohr zirkulieren zu lassen.

9. System nach Anspruch 8, wobei das Wachstumsrohr in einer geneigten Position bereitgestellt ist.

10. System nach einem der Ansprüche 8 oder 9, wobei der Behälter weiter eine Probeentnahmevorrichtung umfasst, z.B. ein Probeentnahmerohr und/oder einen Belüftungsfilter.

11. System nach einem der Ansprüche 8 bis 10, wobei die einzelne Gesamtpflanze pre-mycorrhiziert ist.

## Revendications

1. Procédé de préparation d'au moins une plante entière prémycorhizée comprenant les étapes consistant à :
a1) fournir des boîtes de Pétri à deux compartiments ayant une base et un couvercle et dans lesquels un compartiment pour racines (CR) est ménagé et séparé physiquement d'un compartiment hyphal (CH),
a2) pratiquer un trou dans la base et le couvercle des boîtes de Pétri sur le côté CR,
a3) remplir le CR et le CH avec un milieu approprié,
a4) transférer au moins une plante stérilisée dans le compartiment CR avec les racines placées à la surface du milieu et la pousse s'étendant à l'extérieur de la boîte de Pétri,
a5) inoculer des spores d'un champignon mycorhizien arbusculaire (MA) à proximité des racines des plantes et fermer les boîtes,
a6) envelopper les boîtes de Pétri pour maintenir le champignon MA et les racines des plantes dans l'obscurité,
a7) transférer les boîtes de Pétri dans un phytotron,
a8) une fois que les champignons MA ont colonisé le CR et le CH de la boîte, pratiquer un ou plusieurs trous supplémentaires dans la base et le couvercle du CH et introduire une ou plusieurs plantes stérilisées supplémentaires dans lesdits trous supplémentaires, et
a9) faire croître lesdites plantes supplémentaires dans le réseau mycélien, obtenant ainsi des plantes prémycorhizées.

2. Procédé selon la revendication 1, dans lequel lesdites une ou plusieurs plantes supplémentaires à l'étape a8) sont au stade de 3 ou 4 feuilles et ont un système radical avec 2 ou 3 racines.

3. Procédé selon la revendication 1 ou 2, dans lequel lesdites plantes prémycorhizées ont des racines exemptes de contaminants microbiens.

4. Procédé de production de masse *in vitro* de champignons MA comprenant les étapes consistant à :
a) préparer au moins une plante entière prémycorhizée selon le procédé de l'une quelconque des revendications 1 à 3,
b) introduire les racines d'une seule plante prémycorhizée préparée selon le procédé de l'une quelconque des revendications 1 à 3, dans un système stérilisé, dans lequel ledit système comprend un tube de croissance pourvu d'une ouverture aux deux extrémités et pourvu en outre d'une autre ouverture sur son côté supérieur pour introduire lesdites racines dans ledit tube et permettre à ou aux racines de ladite plante de croître à l'extérieur du tube de croissance, ledit tube de croissance comprenant en outre un dispositif à grille séparant la racine de l'extrémité du tube, ledit système comprenant en outre un réservoir contenant une solution de nutriments pour alimenter ladite plante et lesdits champignons MA, ledit réservoir étant connecté de manière opérationnelle au tube de croissance, et
c) faire croître les racines de ladite plante introduite à une température de 18-25°C, une humidité relative de 60-80 %, une intensité lumineuse de 200-400 µmol m-2 s-1 et une longueur de jour de 16 h de jour/8 h de nuit et faire croître la ou les pousses de ladite plante dans des conditions d'air libre.

5. Procédé selon l'une quelconque des revendications 1 à 4, dans lequel lesdits champignons MA sont des champignons sélectionnés parmi Glomeromycota Phylum, de préférence parmi l'ordre Glomerales et plus préférablement parmi les espèces *Glomus intraradices, Glomus proliferum, Glomus etunicatum, Glomus clarum, Glomus manihotis, Glomus aggragatum, Glomus caledonium, Glomus calroideum, Glomus fasciculatum* et *Glomus hoï.*

6. Procédé selon l'une quelconque des revendications 1 à 5, dans lequel lesdites plantes sont sélectionnées dans le groupe comprenant les herbes, les dicotylédones fixatrices d'azote, les dicotylédones non fixatrices d'azote, les légumineuses, les cultures et de préférence une espèce *Medicago* et le plus préférablement *Medicago truncatula.*

7. Procédé selon l'une quelconque des revendications 3 à 6, dans lequel ledit procédé de production est réalisé dans des conditions semi-hydroponiques.

8. Système de production de masse *in vitro* de champignons MA comprenant:
- une seule plante entière préparée selon le procédé de la revendication 1, dans lequel les racines de ladite plante sont enfermées dans un tube de croissance pour faire croître ladite plante en symbiose avec des champignons MA,
- moyennant quoi ledit tube de croissance a au moins une ouverture aux deux extrémités et est pourvu d'un dispositif à grille à l'intérieur dudit tube, à l'une de ses extrémités,
- un réservoir contenant une solution de nutriments appropriée pour alimenter ladite plante et lesdits champignons MA,
- un tube d'entrée, prévu au niveau d'une partie supérieure dudit tube de croissance, et un tube de sortie prévu au niveau d'une partie inférieure dudit tube de croissance pour connecter ledit tube de croissance audit réservoir, moyennant quoi ledit tube d'entrée et ledit tube de sortie comprennent des tubes flexibles, qui sont de préférence stériles, et où ledit tube de croissance est en outre pourvu d'une ouverture pour introduire les racines d'une plante dans ledit tube et permettre à une pousse de ladite plante de croître à l'extérieur du tube de croissance, et
- une pompe pour faire circuler la solution de nutriments entre le réservoir et le tube de croissance.

9. Système selon la revendication 8, dans lequel ledit tube de croissance est prévu en position inclinée.

10. Système selon l'une quelconque des revendications 8 ou 9, dans lequel le réservoir comprend en outre un dispositif d'échantillonnage, par exemple un tube d'échantillonnage et/ou un filtre d'aération.

11. Système selon l'une quelconque des revendications 8 à 10, dans lequel ladite seule plante entière est prémycorhizée.
